# EUROPEAN PATENT SPECIFICATION

(11) **EP 0 782 823 B1**
(45) Date of publication and mention of the grant of the patent: **26.09.2001**
(21) Application number: 96203578.8
(22) Date of filing: 17.12.1996
(51) Int. Cl.: A22C 21/00

(54) **Apparatus for transferring slaughtered poultry from a first suspension conveyor towards a second suspension conveyor**
Apparat zum Überleiten von Schlachtgeflügel von einem Förderer zu einem anderen Förderer
Appareil pour transférer des volailles abattues d'un transporteur à un autre

(30) Priority: 05.01.1996 NL 1002027
(43) Date of publication of application: 09.07.1997
(73) Proprietor: MACHINEFABRIEK MEYN B.V., 1511 AE Oostzaan (NL)
(72) Inventor: Veraart, Antonius Jozef, 1511 AE Oostzaan (NL)
(74) Representative: Van Breda, Jacobus

(56) References cited:
- EP-A- 0 155 014
- EP-A- 0 259 920
- GB-A- 887 560
- NL-C- 1 000 029
- US-A- 4 449 626

## Description

The invention relates to an apparatus for transferring slaughtered poultry from a first suspension conveyor towards a second suspension conveyor, comprising a supply station contiguous with the first suspension conveyor and a discharge station contiguous with the second suspension conveyor and comprising a transfer unit positioned between said two suspension conveyors, said transfer unit being provided with a receiving station which is drivable in synchronisation with the supply station and with a delivery station which is drivable in synchronisation with the discharge station and further with a transfer track connecting the receiving station with the delivery station and vice versa, said track comprising transfer means movable there along with carriers for the poultry, wherein the transfer track comprises a roundgoing support onto which the transfer means are mounted such that in a not obstructed situation the transfer means do not carry out a relative movement with respect to said support but can move relative to said support when in an obstructed situation.

Such an apparatus is described in Dutch patent application 1.000.029 in the name of applicant. Basically such a known apparatus operates in the following way. At the receiving station as well as at the delivery station the transfer means, which comprise carriers for the poultry, move in synchronisation with the passing suspension hooks of the first suspension conveyor and the second suspension conveyor, respectively. Thus it is possible that the poultry which with its legs is suspended from the first suspension conveyor, at the supply station and in the receiving station is transferred towards the transfer means, in such a way that the poultry with its legs will be suspended in the carriers thereof. At the delivery station the opposite occurs, such that at that location the poultry is transferred towards the suspension hooks of the second suspension conveyor which at that moment are present in the discharge station. Finally the poultry is discharged by means of the second suspension conveyor.

Such an apparatus, also indicated as buffer transfer device, is mainly meant for connecting two suspension conveyors of which the conveying velocities do not always fully correspond. If for example the velocity of the first suspension conveyor is temporarily higher than the velocity of the second suspension conveyor a small amount (buffer amount) of transfer means will be created on the transfer unit between the receiving station and the delivery station. When the velocity of the second suspension conveyor increases relative to the velocity of the first suspension conveyor (or even exceeds it) this amount is used to compensate this difference in velocity.

It will be clear that for a proper operation of such an apparatus a sufficiently large number of transfer means should be present between the receiving station and delivery station or between the delivery station and the receiving station, respectively.

In the so-called not obstructed situation the transfer means move along with the roundgoing support such that between these no relative movement occurs. This means that the transfer means (and more important, the poultry supported thereby) are fully stationary relative to the roundgoing support, such that no undesired vibrations are introduced into the transfer means (or poultry, respectively). As a result it specifically becomes possible to conduct measurements of the poultry which are not disturbed by undesired influences. Among others one can imagine the measurement of the weight of the poultry.

The apparatus described in Dutch patent application 1.000.029 uses an aluminum guide ring with folded-in steel rings mounted to the support. It is engaged by steel guide wheels mounted on the transfer means. It is a disadvantage of said construction that due to the relative motion between the steel rings and the steel guide wheels iron atoms are forced outwardly and cause oxidation. Said oxidation is in a characterising manner visible as red corrosion. This phenomenon is known as tribocorrosion. Due to the created corrosion disturbances occur in respect of the motion of the transfer means relative to the support, as a result of which the operation of the apparatus may be influenced in a negative way.

EP-A-0 259 920 teaches a device for the selective transfer of slaughtered poultry supplied on a conveyor track to one or more discharge stations, in which a buffer device is applied in which the birds to be discharged can be temporarily stored. Transfer from one conveyor track to the next occurs by application of an endless transfer track having guided along it transfer hooks, which can either stop or be driven along this transfer track. The hooks are guided by means of bearing rollers on a stationary outer ring of the transfer track, and by means of friction blocks are slippingly driven by a rotating inner ring of said transfer track. A disadvantage of this known device is that the contacting areas of the bearing rollers with the guiding ring gives rise to the above-mentioned tribocorrosion, which is particularly enhanced by the severe superficial pressures caused by the radii of the bearing rollers in combination with the guiding ring. A further problem is that the accuracy of guiding the hooks by the cooperating rolling bearers and guiding ring is optimal in one direction only, i.e. in the plane of the bearing rollers.

It is an object of the invention to provide a solution for this problem.

Thus the apparatus according to the invention is characterised in that the support comprises an endless plastic guide means guiding said transfer means, said guide means comprising guide profiles positioned at its outer side and inner side, respectively, wherein said guide profiles each comprise two guide faces which there between enclose an angle between 120° and 140° and wherein each transfer means is provided with at least two guide wheels engaging the respective ones of the guide profiles of the guide means and having a circumferential shape which corresponds with the shape of the guide faces.

According to the invention a combination of a number of measures is proposed which have as result that a proper motion of the transfer means relative to the support is guaranteed under all circumstances. At one hand a plastic guide means is provided, thus avoiding a steel to steel contact. For taking care that replacement of a steel ring (as applied in the apparatus described before, which serves as a starting point) by a plastic guide means does not have any influence on the accuracy with which the transfer means is guided and positioned relative to the support, the guide means in correspondence with a further measure is provided at its inner side and at its outer side each with a specially shaped guide profile having two guide faces enclosing there between an angle between 120° and 140°. Finally the guide means are provided with guide wheels conformed to the shape of the guide faces.

As a result of the mentioned combination of measures at one hand the occurence of tribocorrosion is avoided in a reliable manner, whereas at the other hand a precise guiding of the transfer means relative to the support is guaranteed.

In correspondence with a preferred embodiment of the apparatus according to the invention the angle enclosed between the guide faces is 130°. It appeared from practical tests that such an angle generally leads to the most optimal results.

Further it is preferred, that each transfer means is provided with four guide wheels which in pairs engage both guide profiles of the guide means. As a result of the application of four guide wheels the transfer means offer an extremely stable position in respect of the guide means.

Further it may be advantageous in certain circumstances that at least one pair of guide wheels is settable in common on the transfer means. Like this assembling and disassembling of the transfer means is extremely simple. Further this enables a simple setting.

Finally a special embodiment of the apparatus according to the invention is mentioned, in which each transfer means carries a guide skid which upon a certain load on the transfer means can engage the surface of the support. Under normal circumstances the guide skid is positioned at some distance above of the surface of the support; only when the load on the transfer means becomes to large and a damaging thereof or of the guide profile or guide wheels, respectively, threatens the guide skid engages the surface of the support and thus creates a limit to the deformation of said parts. In this aspect the guide skid is shaped such that a relative motion between it and the surface of the support may occur with little friction, such that the operation of the apparatus in its entirety is not or hardly influenced.

Hereinafter the invention will be elucidated by means of the drawing in which an embodiment of the apparatus according to the invention is illustrated.
Fig. 1 shows, schematically, a top plan view of part of a transfer means provided in an apparatus according to the invention;
fig. 2 shows a side-elevational view, and
fig. 3 shows on a larger scale the detail indicated with III in fig. 2.

The transfer means which has been illustrated partially in the figures forms part of an apparatus which is described in Dutch patent application 1.000.029 in the name of applicant. For a detailed description of such an apparatus reference is made to said application.

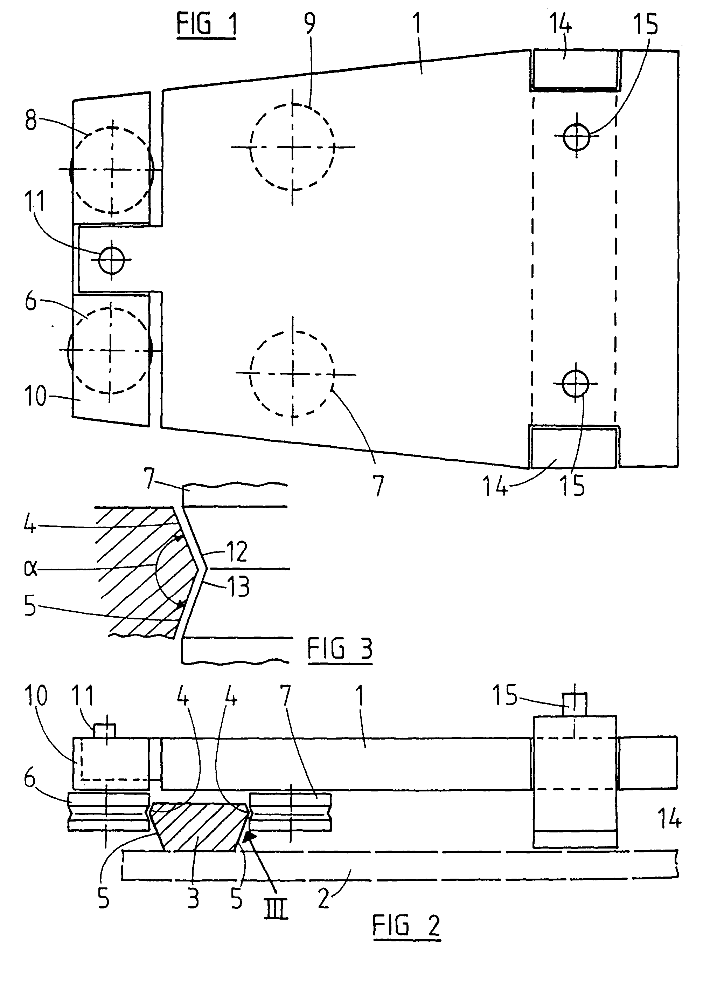

The transfer means 1, which has only been illustrated partially in the figures, substantially has the same function as the transfer means indicated by reference number 23 in said above referenced Dutch patent application. Now, of such a transfer means only that part is illustrated which co-operates with a support 2 (illustrated in dotted lines in fig. 2) which for example may comprise a rotating disc. Thus the transfer means 1 again may be provided with a construction which enables weighing a bird conveyed by the transfer means. For a detailed description of a such a construction again reference is made to the above mentioned Dutch patent application.

In correspondence with the present invention the support 2 comprises an endless plastic guide means 3. When the support 2 is shaped as a rotating disc the guide means 3 has the shape of an endless ring.

At its inner side and at its outer side the guide means 3 is provided with guide profiles each comprising two guide faces 4 and 5 which therebetween enclose an angle between 120° and 140°.

The transfer means 1 is provided with four guide wheels 6-9. These guide wheels are arranged into pairs 6, 8 and 7, 9. The guide wheels 6 and 8 are attached to a slidable part 10 which is settable relative to the transfer means 1 by setting means not shown further and which can be fixed, for example by means of a screw 11.

Each guide wheel 6-9 has a circumferential shape which corresponds with the shape of the guide profiles of the guide means 3 which are defined by the guide faces 4 and 5. Thus each guide means 6-9, as illustrated in fig. 3, comprises two guide faces 12 and 13 which there between enclose an angle which is complementary to angle α between the guide faces 4 and 5. As a result a proper co-operation between the guide wheels and the guide means 3 occurs.

In a preferred embodiment of the apparatus according to the invention said angle α is 130°. Whereas the guide means 3 is made of plastic material, the guide wheels are made of steel or a steel alloy. Thus the occurrence of tribocorrosion is avoided.

Further it appears from the figures that the transfer means 1 carries a guide skid 14 which in the illustrated position with its lower side is free from the surface of the support 2. When the load on the transfer means 1 becomes to high the lower side of the guide skid 14 will engage the surface of the support 2, such that an excessive deformation or load, respectively, of the transfer means 1 (or the guide means 3 or guide wheels 6-9, respectively) may be avoided.

The connection between the guide skid 14 and the transfer means 1 may be settable, for example through the provision of screws 15 indicated schematically.

Mounting means (connections, openings etc. provided on the transfer means 1 for parts which also belong to the transfer means (in correspondence with Dutch patent application 1.000.029) have not been illustrated.

The invention is not limited to the embodiment described before which can be varied widely within the scope of the claims. In a way equivalent with the illustrated embodiment the guide means 3 may be made of steel and the wheels 6-9 may be made of plastic material. This does not change the principle.

## Claims

1. Apparatus for transferring slaughtered poultry from a first suspension conveyor towards a second suspension conveyor, comprising a supply station contiguous with the first suspension conveyor and a discharge station contiguous with the second suspension conveyor and comprising a transfer unit positioned between said two suspension conveyors, said transfer unit being provided with a receiving station which is drivable in synchronisation with the supply station and with a delivery station which is drivable in synchronisation with the discharge station and further with a transfer track connecting the receiving station with the delivery station and vice versa, said track comprising transfer means (1) movable there along with carriers for the poultry, wherein the transfer track comprises a roundgoing support (2) onto which the transfer means (1) are mounted such that in a not obstructed situation the transfer means (1) do not carry out a relative movement with respect to said support (2) but can move relative to said support (2) when in an obstructed situation, **characterised in that** the support (2) comprises an endless plastic guide means (3) guiding said transfer means (1), said guide means (3) comprising guide profiles positioned at its outer side and inner side, respectively, wherein said guide profiles each comprise two guide faces (4, 5) which there between enclose an angle between 120° and 140° and wherein each transfer means (1) is provided with at least two guide wheels (6, 8 and 7, 9) engaging the respective ones of the guide profiles of the guide means (3) and having a circumferential shape which corresponds with the shape of the guide faces (4, 5).

2. Apparatus according to claim 1, **characterised in that** the angle enclosed between the guide faces (4, 5) is 130°.

3. Apparatus according to claim 1 or 2,
**characterised in that** the guide wheels (6, 8 and 7, 9) are made of steel or a steel alloy.

4. Apparatus according to one of the previous claims, **characterised in that** each transfer means (1) is provided with four guide wheels (6, 8 and 7, 9) which in pairs engage both guide profiles of the guide means (3).

5. Apparatus according to claim 4, **characterised in that** at least one pair of guide wheels (6, 8) is settable in common on the transfer means (1).

6. Apparatus according to one of the previous claims, **characterised in that** each transfer means (1) carries a guide skid (14) which upon a certain load on the transfer means (1) can engage the surface of the support (2).

## Patentansprüche

1. Gerät zur Weiterleitung von Schlachtgeflügel von einer ersten zu einer zweiten Hängeförderanlage, umfassend eine an die erste Hängeförderanlage angrenzende Zuführstation und eine an die zweite Hängeförderanlage angrenzende Abladestation und umfassend eine zwischen beiden Hängeförderanlagen liegende Weiterleitungseinheit, wobei die Weiterleitungseinheit mit einer Annahmestation, die synchron mit der Zuführstation betreibbar ist, und einer Anlieferungsstation, die synchron mit der Abladestation betreibbar ist, und außerdem mit einer Weiterleitungsschiene, die die Annahmestation mit der Anlieferungsstation verbindet und umgekehrt, ausgestattet ist, wobei die Schiene Weiterleitungsmittel (1) umfaßt, die daran entlang mit Trägern für das Geflügel verschiebbar sind, wobei die Weiterleitungsschiene einen Rundlaufträger (2) umfaßt, an dem die Weiterleitungsmittel so befestigt sind, daß die Weiterleitungsmittel (1) in einer unblockierten Situation keine relative Bewegung bezüglich des Trägers (2) ausführen, sich allerdings in einer blockierten Situation relativ zu dem Träger (2) bewegen können, **dadurch gekennzeichnet, daß** der Träger (2) eine Kunststoff-Endlos-Führungseinrichtung (3) umfaßt, die das Weiterleitungsmittel (1) führt, wobei das Führungsmittel (3) an seiner Außen- und an seiner Innenseite liegende Führungsprofile umfaßt, wobei die Führungsprofile jeweils zwei Führungsflächen (4, 5) umfassen, die dazwischen einen Winkel zwischen 120 und 140 ° einschließen, und wobei jedes Weiterleitungsmittel (1) mit mindestens zwei Führungsrädern (6, 8 und 7, 9) ausgestattet ist, die jeweils in die entsprechenden Führungsprofile des Führungsmittels (3) eingreifen und eine den Führungsflächen (4, 5) entsprechende Umfangsform aufweisen.

2. Gerät nach Anspruch 1, **dadurch gekennzeichnet, daß** der zwischen den Führungsflächen (4, 5) eingeschlossene Winkel 130° beträgt.

3. Gerät nach Anspruch 1 oder 2, **dadurch gekennzeichnet, daß** die Führungsräder (6, 8 und 7, 9) aus Stahl oder einer Stahllegierung hergestellt sind.

4. Gerät nach einem der vorhergehenden Ansprüche, **dadurch gekennzeichnet, daß** jedes Weiterleitungsmittel (1) mit vier Führungsrädern (6, 8 und 7, 9) ausgestattet ist, die paarweise in beide Führungsprofile des Führungsmittels (3) eingreifen.

5. Gerät nach Anspruch 4, **dadurch gekennzeichnet, daß** mindestens ein Paar von Führungsrädern (6, 8) gängig an das Weiterleitungsmittel (1) ansetzbar ist.

6. Gerät nach einem der vorhergehenden Ansprüche, **dadurch gekennzeichnet, daß** jedes Weiterleitungsmittel (1) eine Führungsschiene (14) trägt, die bei einer bestimmten Last auf dem Weiterleitungsmittel (1) in die Oberfläche des Trägers (2) eingreifen kann.

## Revendications

1. Dispositif de transfert de volailles abattues à partir d'un premier convoyeur à suspension vers un second convoyeur à suspension, comprenant une station d'alimentation contiguë avec le premier convoyeur à suspension et une station de déchargement contiguë avec le second convoyeur à suspension et comprenant une unité de transfert placée entre lesdits deux convoyeurs à suspension, ladite unité de transfert étant pourvue d'une station de réception qui est entraînable en synchronisation avec la station d'alimentation et d'une station de délivrance qui est entraînable en synchronisation avec la station de déchargement et également d'une piste de transfert connectant la station de réception avec la station de délivrance et vice-versa, ladite piste comprenant des moyens de transfert (1) déplaçables sur sa longueur avec des éléments porteurs pour les volailles, selon lequel la piste de transfert comprend un support tournant en rond (2) sur lequel les moyens de transfert (1) sont montés de telle sorte que dans une situation sans gêne les moyens de transfert (1) n'ont pas de mouvement relatif par rapport audit support (2) mais peuvent se déplacer par rapport audit support (2) dans une situation de gêne, **caractérisé en ce que** le support (2) comprend des moyens de guidage (3) sans fin en matière plastique guidant lesdits moyens de transfert (1), lesdits moyens de guidage (3) comprenant des profilés de guidage placés sur leurs côtés extérieur et intérieur, respectivement, **en ce que** lesdits profilés de guidage comprennent chacun deux faces de guidage (4, 5) qui définissent entre elles un angle compris entre 120 et 140° et **en ce que** chaque moyen de transfert (1) est pourvu d'au moins deux roues de guidage (6, 8 et 7, 9) coopérant avec les profilés de guidage respectifs des moyens de guidage (3) et ayant une forme circonférentielle qui correspond à la forme des faces de guidage (4, 5).

2. Dispositif selon la revendication 1, **caractérisé en ce que** l'angle compris entre les faces de guidage (4, 5) est de 130°.

3. Dispositif selon la revendication 1 ou 2, **caractérisé en ce que** les roues de guidage (6, 8 et 7, 9) sont faites en acier ou en alliage ferreux.

4. Dispositif selon l'une des revendications précédentes, **caractérisé en ce que** chaque moyen de transfert (1) est pourvu de quatre roues de guidage (6, 8 et 7, 9) qui coopèrent par paires avec les deux profilés de guidage des moyens de guidage (3).

5. Dispositif selon la revendication 4, **caractérisé en ce que** au moins une paire de roues de guidage (6, 8) est installable en commun sur les moyens de transfert (1).

6. Dispositif selon l'une des revendications précédentes, **caractérisé en ce que** chaque moyen de transfert (1) porte un patin de guidage (14) qui lorsque les moyens de transfert (1) sont soumis à une certaine charge peut coopérer avec la surface du support (2).
